# EUROPEAN PATENT SPECIFICATION

(11) **EP 1 603 665 B1**
(45) Date of publication and mention of the grant of the patent: **02.07.2008**
(21) Application number: 04714533.9
(22) Date of filing: 25.02.2004
(51) Int. Cl.: B01J 2/02, B05B 5/025

(54) **POWDER GENERATING APPARATUS AND METHOD FOR PRODUCING POWDER**
PULVERERZEUGUNGSVORRICHTUNG UND VERFAHREN ZUR HERSTELLUNG VON PULVER
APPAREIL DE GENERATION DE POUDRE ET PROCEDE DE PRODUCTION DE POUDRE

(30) Priority: 26.02.2003 SE 0300514
(43) Date of publication of application: 14.12.2005
(73) Proprietor: AstraZeneca AB, 151 85 Södertälje (SE)
(72) Inventor: LASTOW, Orest, S-221 87 Lund (SE)
(86) International application number: PCT/SE2004/000246
(87) International publication number: WO 2004/076057

(56) References cited:
- EP-A1- 0 258 016
- WO-A1-01/87491
- WO-A1-02/30163
- WO-A1-02/085530
- US-A- 4 264 641
- US-A1- 2002 150 669
- US-B1- 6 479 077

## Description

### Background

This invention relates to a powder generation apparatus and methods and in particular to the electro hydrodynamic (EHD) spraying of liquids and drying thereof to a powder. The apparatus and methods may be used for generation of a variety of powders for use in different applications, in particular but not solely in the field of medicinal drug powder production. The apparatus and methods can produce powders of different properties in terms of size distribution, density, morphology, solid state etc.

There are a number of known inventions in prior art, which produce powders using electrostatic spraying of liquids and drying thereof to a powder. The present invention addresses a number of problems and limitations associated with the prior art.

### Prior art

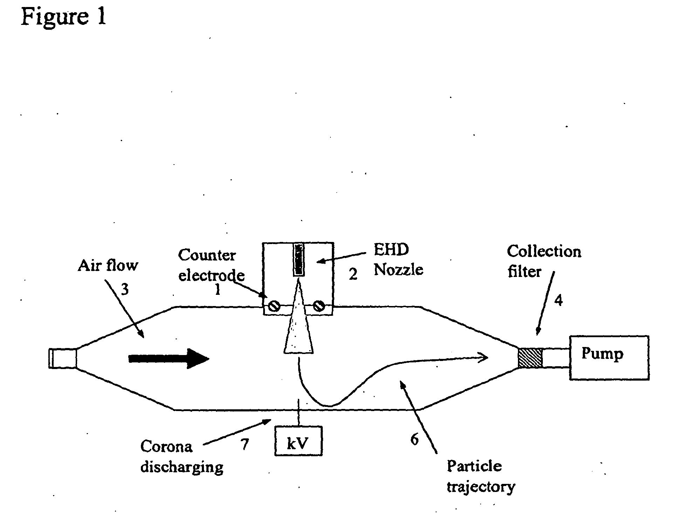

EHD spray drying is a well-known technology and produces droplets of a narrow size distribution. A conventional nozzle (2), see Figure 1, operates at high voltages, usually up to the order of 10-20 kV. The conventional nozzle requires a counter electrode (1) at a distance downstream of the nozzle. Either ground or a potential different to the potential of the nozzle is applied to the counter electrode. The downstream position of the nozzle leads to deposition of droplets on the counter electrode, hence low production yield and a less robust apparatus.

The high atomisation potential leads to highly charged droplets. The surface charge concentration of a droplet increases as the droplet dries until a charge concentration limit is reached. The charge concentration limit is when the repelling electrical forces are near or exceed the cohesive forces and the surface tension in the droplet. The consequence is a disintegration of the droplet into a multitude of droplets with a wide size distribution. The aerosol obtained after droplet disintegration is of a quality, in terms of size distribution, not adequate for powder production. The reactors, described in prior art, therefore always include a discharging means (7). The discharging means is commonly situated at a suitable position, typically along the spraying axis, opposite the atomization point.

The fully or partially discharged droplets can only be controlled or transported by aerodynamic or gravitational forces. In prior art the discharged droplets are transported by the airflow (3) and collected on a filter (4). In a traditional reactor the solution is atomised perpendicularly to the airflow and the particle trajectories (6) are turned 90 degrees. The yield is therefore low due to deposition on the reactor walls and other parts of the reactor. A filter is also unsuitable for particle collection since no continuous retrieval is possible.

Charged droplets repel each other. The discharged droplets can, however, coalesce leading to a wider size distribution. Due to increased coalescence rate, the process cannot be scaled up by use of multiple nozzles.

There are limits on the types of liquids that can be spray dried in a conventional reactor. A major limiting factor is the conductivity of the liquid. It is disclosed in the literature that the conductivity of the liquid must be in the range of 10⁻⁵ S/m - 10⁻⁷ S/m.

There are limits to the usefulness of such known apparatus and methods described in prior art. There exists a need for apparatus and methods, which can generate droplets in a reactor with a nozzle not requiring a downstream counter electrode, not requiring discharging of the generated droplets, that can control the transport and collection of droplets by electrical means utilizing the charge of droplets, that can be scaled up by using a multiple of nozzles and that can use liquids outside the conductivity range found in prior art.

### Present invention

An object of the present invention is to overcome various problems and limitations associated with the prior art methods and apparatus for producing powders using electrostatic spraying of liquids and drying thereof.

A further object is to provide an apparatus and methods capable of dispensing liquids, which have conductivities and viscosities outside the range of those capable of being dispensed by the apparatus, and methods of the prior art.

The present invention provides a powder generation apparatus and a method for the generation of a powder, in particular for the production of a medicinal drug powder.

According to the present invention there are several members provided in the apparatus. The different members are: a fluid supply means, a droplet generation means having a dispensing nozzle and counter electrode means surrounding said nozzle and a reactor. The inside diameter of said dispensing nozzle is less than 3 millimetres.

### Fluid supply means

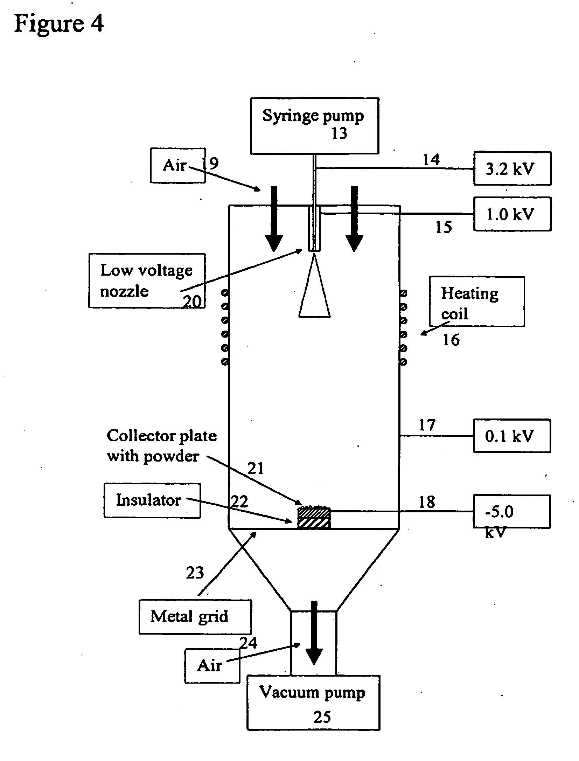

Referring to Figure 4, the present invention comprises a fluid supply means (13). In some forms of the present invention, the fluid supply means may comprise means for overpressurising the fluid. In a preferred form of the present invention the fluid supply means consists of a liquid feeder. The bulk of the fluid may be stored in a tank or any other cavity. In preferred forms of the invention, in which medicines are dispensed the fluid supply means will need to be of a form that does not affect the medical properties of the fluid. The preferred flow rate of fluid is, in this particular embodiment, 0.5 microlitres per second. A suitable pump is a syringe pump or any other pump that can provide a stable flow rate.

### Droplet generation means

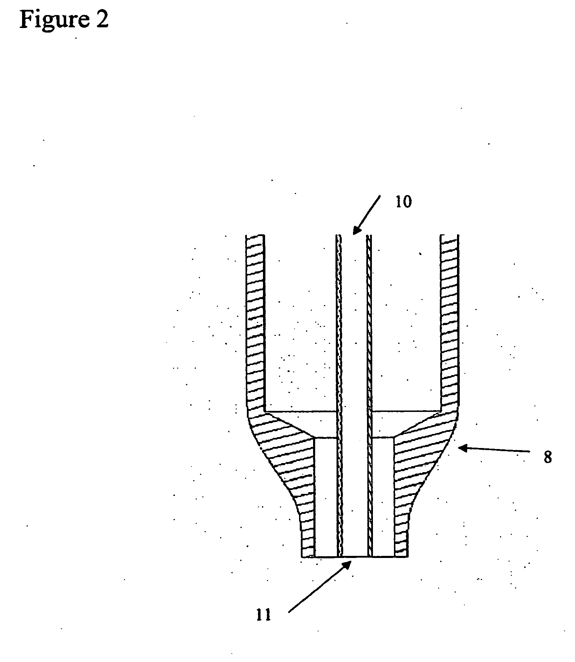

Droplet generation means comprise an electrically conductive fluid dispensing nozzle (10, 20) receiving fluid supplied by suitable fluid supply means and having an exit (11), see Figure 2, a counter electrode means (8) surrounding said dispensing nozzle and being distal to the fluid dispensing nozzle exit and having an electrical potential difference thereto. The droplet generation means is characterised in that the inside diameter of the dispensing nozzle is less than 3 millimetres. In a preferred form the inside diameter of the dispensing nozzle is less than 1 millimetre and in a particularly preferred forms of the invention, when the liquid is outside the above mentioned conductivity range found in prior art, the inside is less than 0.5 millimetres.

In preferred forms of the present invention, the electrically conducting fluid dispensing nozzle (10) may take the form of a small diameter syringe needle. Suitable dispensing nozzles may be machined or a small diameter syringe needle may be used. The nozzle is required to be electrically conductive and to be made of a material that does not affect the properties of the fluid to be dispensed. Such a suitable needle material is e.g. stainless steel or other suitable non-reactive material. The nozzle could be injection moulded or machined plastic with a conducting part. The conductive part could be immersed in the liquid and not being in contact with the nozzle.

Surrounding the fluid-dispensing nozzle, at least in part, is a counter electrode means, (8). The means is distal to the exit of the fluid-dispensing nozzle. In preferred forms of the present invention the counter electrode means is in the form of a ring or cylinder and completely surrounds the nozzle. In other less preferred forms of the invention there may be a break in the counter electrode means. This may allow an electrically non-conducting support to be attached to the fluid-dispensing nozzle. The counter electrode means, in use, has an electrical potential difference to the electrically conductive fluid-dispensing nozzle. The potential difference required to obtained atomisation is, due to the novel geometry, significantly lower than what can be found in prior art. In preferred forms of the present invention the potential difference is + 2.2 kV (14,15). For example the potential difference could be as a result of the counter electrode means having an electrical potential of + 1 kV (14) and the dispensing nozzle being at + 3.2 kV (15). It has been found that if the counter electrode means is actually grounded, that is, at a potential of 0 volts, the droplets are drawn to the counter electrode means and are thus not dispensed properly. The potential difference may be greater than or less than 2.2 kV but it has been found that this level gives the best results for this particular nozzle diameter, flow rate and drug ethanol solution. The potential difference may be produced by a number of means for example: High voltage DC/DC converter. Preferably the potential difference between the dispensing nozzle and the counter electrode is less than 5 kV. More preferably, the potential difference is less than 3 kilovolts. The potentials applied to the nozzle and counter electrode should be below such magnitude that leads to corona discharging or streamer formations.

The low atomization voltage gives moderately charged droplets and no discharging is needed. The potential difference characterised as sufficiently low so that no discharging of the airborne droplets is needed.

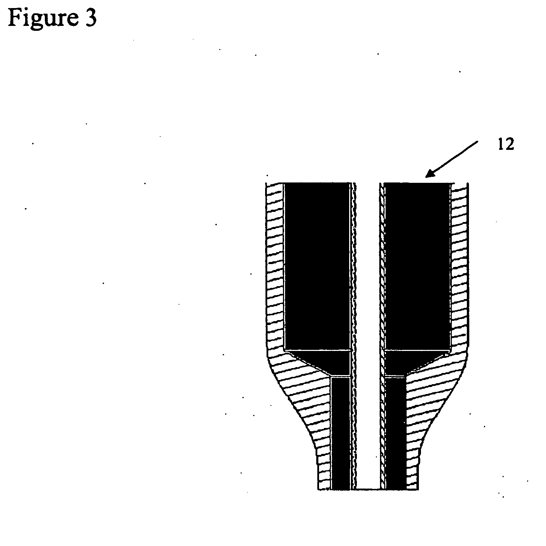

The counter electrode means (8), see Figure 2, may have a variety of shapes but is preferably in the form of a ring or a cylinder. In the preferred form of the invention, as illustrated, the counter electrode means consists of a cylinder positioned level with the exit of the nozzle. The counter electrode means is preferably made from a metallic material and especially preferably it may be machined or less preferably moulded. An insulating material such as a plastic material or preferably a ceramic preferably occupies the volume (12) between the fluid dispensing nozzle and the counter electrode means, see Figure 3.

In many cases air or another gas or gas mixture can be used to provide sufficient electrical insulation. The purpose of this material is to both electrically insulate the counter electrode means from the fluid-dispensing nozzle and to support the dispensing nozzle inside the counter electrode means. The dispensing nozzle should be centred in the counter electrode means.

### Reactor

A solution of one or several drugs, in an organic solvent, e.g. ethanol, is dispensed using the above-mentioned nozzle; see Figure 4 (20). In a preferred form of the invention the spray is generated inside an axially symmetrical reactor and dried to a powder. In a less preferred form, the spray can be generated outside the reactor and directed into the reactor. The droplets are dried by the flow of air (19) or any other suitable gas that in some instances can be heated. The heating of the air or gas in which the droplets are dried can be obtained using various kinds of heating means e.g. heating coils positioned inside the walls of the reactor or inside the reactor cavity. In a preferred form the heating coils are wrapped around the outside of the reactor (16). In another preferred form the above-mentioned air or gas can be heated prior to entering the reactor. To increase the evaporation rate the liquid can be heated prior to aerosolization.

In one preferred form, the shape of the reactor is axis-symmetric, either cylindrical or conical. Other shapes e.g. non-circular cross section or asymmetric shapes could be used in a less preferred form of the invention. The size of the reactor should be such that droplet and particle deposition is at a minimum. In a particular form, the reactor diameter is 15 cm and the height is 30 cm. Both dimensions can be either higher or lower to accommodate for different sizes of nozzles or different number of nozzles. The dimensions of the reactor also influence the residence time and consequently affect the drying process. The dimensions and geometry of the reactor must be optimised with respect to the flow inside.

In one preferred form, the reactor is connected to vacuum or low pressure (25) to obtain a flow of air (19) or gas in the direction of the spray away from the nozzle. In some forms no such flow is required. The flow rate can also be used to control the residence time of the droplets and particles inside the reactor. The residence time is an important control parameter for the drying process.

It has been found that preferred forms of the present invention could provide droplets with a moderate charge. A moderate charge is when the majority of the droplets are below the Rayleigh limit for the whole duration of the time that said droplets are airborne. Preferred forms of the present invention operate at lower voltages than found in prior art and consequently produce less charged droplets. When the droplet and particle charge is sufficiently low no discharging is required and the reactor can be significantly simplified since no discharging means has to be implemented. A reactor without any discharging means is significantly more robust and simpler to operate and optimise.

The moderate charge is however sufficient to affect the transport of said airborne droplets or particles and consequently droplets or particles will repel each other and minimise coalescence. Undesired deposition, particularly but not solely, on the reactor walls can be avoided by applying a potential (17)of the same polarity as the droplets. By decreasing the deposition of the droplets and particles inside the reactor the production yield can be improved. The potential (17) applied to sites of undesired deposition should be sufficiently high to repel the charged droplets or charged particles. The potential (18) on the collecting surface should be sufficiently high to efficiently collect the charged particles. All the potentials applied to the different members of the reactor should be below such magnitudes that lead to corona discharging or streamer formations.

The low atomization voltage applied to the above-mentioned nozzle gives moderately charged droplets and no discharging is needed. The charged droplets can be transported and collected by means of electric fields. In one form of the invention the dry particles are collected on a charged solid plate (21) of opposite polarity (18). The plate can be placed on an insulating disk (22), which is placed on a conductive grid also connected to a potential of the same polarity as the droplets or particles. In other preferred forms of the invention the dried particles are collected on a rotating disk, rotating cylinder, moving conveying belt or any other means of continuous collection and retrieval of the generated powder.

As mention above, the flow rate of the fluid, in one of the preferred forms of the present invention, is 0.5 microlitres per second. In some applications this may be sufficient. The process can be scaled up by use of nozzles with a larger diameter or by use of multiple nozzles. Due to the unipolar charge of the droplets, no coalescence occurs. In these cases a further preferred form of the present invention provides a plurality of nozzles. For example, there may be ten nozzles in close proximity to each other. It is preferable that the fluid dispensing nozzles in this case are very close to each other in order to ensure that the fluid dispensed is in a single flow of droplets. In other forms of this invention, the counter electrode means may surround all of the fluid dispensing nozzles. In other, less preferred, forms of the invention each fluid-dispensing nozzle may have an individual counter electrode means surrounding it.

The present invention is able to produce powders of a variety of substances, including medicines such as steroids or other suitable powders such as inhaled substances. The ability to produce a powder of a particular substance is dependent on the solubility of said substance in a suitable solvent that can be atomised using the above-mentioned nozzle. Suitable solvents are e.g.: ethanol, heptane, butanol, methanol, ethylene glycol, octanol, acetone, propylene glycol, acetone, dioxane, dodecanol, hexane etc. and also water. The present invention can dispense liquids of higher conductivities, e.g. water, than can be found in prior art. Liquids with conductivities up to 10⁻² S/m can be dispensed using the present invention.

The particle size depends mainly on liquid flow rate, nozzle geometry, solvent properties and drug concentration in the solution. The particle morphology depends mainly on drug concentration in the solution, solvent properties, evaporation rate, droplet residence time, air temperature and airflow rate.

Preferred forms of the present invention are able to provide particles, which are in the respirable range, that is, of a size between 2 and 5 microns. It has been found that particles of this size provide the best medical effect The fact that preferred forms of the invention can dispense fluids having a great range of conductivities enables a wider range of substances to be dispensed without the addition of other agents. Also particles of smaller sizes than 2 microns can be produced. Particles with the size down to 10 nm can be produced. Particles of a size range 5-100 microns can also be produced. The present invention can produce powders consisting of particles of a narrow size distribution.

The present invention is able to produce powders consisting of porous particles with a density less than of homogeneous particles. The porous particles have a geometric size greater than the aerodynamic size. Porous particles have been recognised as desirable for improved lung deposition and efficacy of medical drugs. The porosity can be obtained and controlled by changing the drug concentration in the solution and by changing the drying conditions.

The present invention is able to produce powders consisting of solid particles.

The present invention is able to produce powders from multiple drug substance solutions including medicines such as: budesonide-formoterol or any other combination of drugs that can be dissolved in the same sprayable solvent. The result of a multi component solution is a multi component powder containing e.g. both budesonide-fonnoterol in the individual particles.

## Claims

1. Powder generating apparatus for the generation of a powder in particular but not solely for the production of medicinal drug powder the apparatus comprising: fluid supply means (13), droplet generation means having a dispensing nozzle (10, 20) and counter electrode means (8) surrounding said nozzle (10, 20) and a reactor **characterised in that** the inside diameter of said dispensing nozzle (10, 20) of said droplet generation means is less than 3 millimetres.

2. Powder generating apparatus as claimed in claim 1 wherein said dispensing nozzle (10, 20) has an inside diameter of less than 1 millimetre.

3. Powder generating apparatus as claimed in claim 1 or 2 wherein there is a potential difference between said dispensing means and said counter electrode means (8) of + 2.2 kV.

4. Powder generating apparatus as claimed in any one of claims 1 to 3 wherein said reactor is connected to vacuum or low pressure.

5. Powder generating apparatus as claimed in any one of claims 1 to 4 wherein said reactor is an asymmetric chamber.

6. Powder generating apparatus as claimed in any of claims 1-5, further comprising means for drying the droplets by a flow of air (19) or any other suitable gas.

7. Powder generating apparatus as claimed in claim 6, wherein said flow of air (19) or any other suitable gas is heated by heating means.

8. Powder generating apparatus as claimed in claim 7, wherein said heating means comprises heating coils positioned inside the walls of the reactor, inside the reactor cavity or wrapped around the outside of the reactor (16).

9. Powder generating apparatus as claimed in claim 6, wherein said air or gas is heated prior to entering the reactor.

10. Powder generating apparatus as claimed in any of claims 1-9, wherein the liquid is heated prior to aerosolization.

11. A method of generating powder utilising powder generating apparatus as claimed in any one of claims 1 to 10.

## Patentansprüche

1. Pulvererzeugungsvorrichtung zur Erzeugung eines Pulvers insbesondere aber nicht nur zur Herstellung von Arzneimittelpulver, wobei die Vorrichtung Folgendes umfasst: ein Fluidzufuhrmittel (13), ein Tröpfchenerzeugungsmittel mit einer Abgabedüse (10, 20) und einem Gegenelektrodenmittel (8), das die Düse (10, 20) umgibt, und einen Reaktor, **dadurch gekennzeichnet, dass** der Innendurchmesser der Abgabedüse (10, 20) des Tröpfchenerzeugungsmittels weniger als 3 Millimeter beträgt.

2. Pulvererzeugungsvorrichtung nach Anspruch 1, wobei die Abgabedüse (10, 20) einen Innendurchmesser von weniger als 1 Millimeter aufweist.

3. Pulvererzeugungsvorrichtung nach Anspruch 1 oder 2, wobei ein Potenzialunterschied zwischen dem Abgabemittel und dem Gegenelektrodenmittel (8) von +2,2 kV besteht.

4. Pulvererzeugungsvorrichtung nach einem der Ansprüche 1 bis 3, wobei der Reaktor an Vakuum oder Niederdruck angeschlossen ist.

5. Pulvererzeugungsvorrichtung nach einem der Ansprüche 1 bis 4, wobei der Reaktor eine asymmetrische Kammer ist.

6. Pulvererzeugungsvorrichtung nach einem der Ansprüche 1 bis 5, ferner umfassend Mittel zur Trocknung der Tropfen durch einen Luftstrom (19) oder irgendein anderes geeignetes Gas.

7. Pulvererzeugungsvorrichtung nach Anspruch 6, wobei der Luftstrom (19) oder irgendein anderes geeignetes Gas durch Heizmittel erwärmt wird.

8. Pulvererzeugungsvorrichtung nach Anspruch 7, wobei das Heizmittel Heizspulen umfasst, die innerhalb der Wände des Reaktors oder innerhalb des Reaktorhohlraums positioniert oder um die Außenseite des Reaktors (16) herum gewickelt sind.

9. Pulvererzeugungsvorrichtung nach Anspruch 6, wobei die Luft oder das Gas vor Eintritt in den Reaktor erwärmt wird.

10. Pulvererzeugungsvorrichtung nach einem der Ansprüche 1 - 9, wobei die Flüssigkeit vor der Aerosolisierung erwärmt wird.

11. Verfahren zur Erzeugung von Pulver unter Verwendung der Pulvererzeugungsvorrichtung nach einem der Ansprüche 1 bis 10.

## Revendications

1. Appareil de production de poudre pour la production d'une poudre, en particulier mais pas uniquement pour la production d'une poudre médicamenteuse, l'appareil comprenant : un moyen d'alimentation en liquide (13), un moyen de production de gouttelettes comportant une buse de distribution (10, 20) et un moyen de contre-électrode (8) entourant ladite buse (10, 20), et un réacteur, **caractérisé en ce que** le diamètre interne de ladite buse de distribution (10, 20) dudit moyen de production de gouttelettes est inférieur à 3 millimètres.

2. Appareil de production de poudre selon la revendication 1, dans lequel ladite buse de distribution (10, 20) a un diamètre interne inférieur à 1 millimètre.

3. Appareil de production de poudre selon la revendication 1 ou 2, dans lequel il existe une différence de potentiel entre ledit moyen de distribution et ledit moyen de contre-électrode (8) de +2,2 kV.

4. Appareil de production de poudre selon l'une quelconque des revendications 1 à 3, dans lequel ledit réacteur est relié à un vide ou une basse pression.

5. Appareil de production de poudre selon l'une quelconque des revendications 1 à 4, dans lequel ledit réacteur est une chambre asymétrique.

6. Appareil de production de poudre selon l'une quelconque des revendications 1 à 5, comportant en outre un moyen de séchage des gouttelette à l'aide d'un écoulement d'air (19) ou de tout autre gaz approprié.

7. Appareil de production de poudre selon la revendication 6, dans lequel ledit écoulement d'air (19) ou de tout autre gaz approprié est chauffé par un moyen de chauffage.

8. Appareil de production de poudre selon la revendication 7, dans lequel ledit moyen de chauffage comporte des serpentins de chauffage positionnés à l'intérieur des parois du réacteur, à l'intérieur de la cavité du réacteur ou enveloppant l'extérieur du réacteur (16).

9. Appareil de production de poudre selon la revendication 6, dans lequel ledit air ou ledit gaz est chauffé avant d'entrer dans le réacteur.

10. Appareil de production de poudre selon l'une quelconque des revendications 1 à 9, dans lequel le liquide est chauffé avant sa mise en aérosol.

11. Procédé de production de poudre utilisant un appareil de production de poudre selon l'une quelconque des revendications 1 à 10.
